# EUROPEAN PATENT SPECIFICATION

(11) **EP 3 862 465 B1**
(45) Date of publication and mention of the grant of the patent: **09.11.2022**
(21) Application number: 21154224.6
(22) Date of filing: 29.01.2021
(51) Int. Cl.: C23F 13/04, G01N 17/02, G01N 17/04

(54) **COPPER/COPPER SULPHATE GEL PERMANENT REFERENCE ELECTRODE FOR THE MEASUREMENT OF THE TRUE POTENTIAL AND CURRENT DENSITY OF BURIED METAL STRUCTURES**
KUPFER-/KUPFERSULFAT-GEL-DAUERREFERENZELEKTRODE ZUR MESSUNG DES TATSÄCHLICHEN POTENTIALS UND DER STROMDICHTE VON VERGRABENEN METALLSTRUKTUREN
ÉLECTRODE DE RÉFÉRENCE PERMANENTE SUR GEL DE CUIVRE/DE SULFATE DE CUIVRE POUR LA MESURE DU POTENTIEL RÉEL ET DE LA DENSITÉ DE COURANT DE STRUCTURES MÉTALLIQUES ENFOUIES

(30) Priority: 04.02.2020 IT 202000002143
(43) Date of publication of application: 11.08.2021
(73) Proprietor: CESCOR S.r.l., 20134 Milano (IT)
(72) Inventor: MARCASSOLI, Paolo, 20134 Milano (IT); BAZZONI, Bruno, 20134 Milano (IT)
(74) Representative: Bianchetti & Minoja SRL

(56) References cited:
- US-A- 5 814 982
- US-A1- 2005 006 250
- US-A1- 2011 214 984
- US-A1- 2015 198 518

## Description

### Field of the invention

The present invention relates in general to the field of buried metallic structures, such as for example pipelines for transporting gas and hydrocarbons or water, or tanks, tank bottom's and other types of buried structures, normally cathodically protected in order to prevent external corrosion. More particularly, the invention relates to a new and advantageous copper/copper sulphate gel reference electrode that can be permanently buried, suitable for measuring over time:
(a) the true electrochemical potential of buried metallic structures for the purpose of monitoring the state of protection against corrosion thereof;
(b) the protection current density, verifying through recordings possible electrical interference from direct current (DC) or alternating current (AC).

### State of the art

The protection of buried metal structures and the prevention of their corrosion in the ground by means of the technique known as 'cathodic protection', in fact usually applied and used in combination with the application of organic coatings applied to the structures to be protected, are well known in the art.

Cathodic protection of buried structures can be achieved in various ways, and preferably with the so-called impressed current technique, or with magnesium or zinc galvanic anodes.

In any case, irrespective of the specific type of cathodic protection system adopted, impressed current or galvanic anodes, the cathodic protection system generally comprises one or more permanent reference electrodes, i.e. buried and installed permanently in the ground near the buried structure, by means of which the necessary potential measurements are carried out to verify over time the state of correct protection of the buried structure itself.

For example, in the case of structures consisting of buried pipelines for the transport of oil or gas, the reference electrodes are buried and distributed along the underground route of the pipeline, approximately every 500 or 1000 m, and are connected by means of an electric cable to a measuring point, also called test post, to which a cable connected to the structure is also connected, so as to be able to measure the potential of the buried structure to be protected with respect to the permanent reference electrode.

The permanent reference electrodes are characterised, with respect to the portable ones, by the stability of their potential over time and by the long life of the device in the environment of exposure, such as soil, or sea water, or concrete or something else again.

The most common reference electrode for applications in the ground is the Copper Sulphate Electrode (CSE), available in several versions, both portable and permanent. The most common version for permanent installation consists of an earthenware enclosure in which a copper rod is placed and which is filled with copper sulphate crystals which capture the moisture in the soil, thus acting as an electrolyte. The main limitation of a permanent CSE electrode made in this way is its limited durability due to soil leaching, which causes the water present in the soil to gradually dissolve and disperse the copper sulphate in the soil, so that the average life of the CSE electrode is of the order of a few years. Moreover, the leaching of the soil reflects negatively on the operation of the electrode and involves some negative effects, such as the following:
- the dispersion of metal ions into the environment;
- the accumulation in proximity of the structure of copper ions, which constitute a chemical species potentially corrosive to steel.

Improved versions of the electrode provide for the use of copper sulphate gel or sintered backfills, and more rugged and durable container bodies.

The monitoring system may also comprise one or more elements, or platelets, or coupons of carbon steel, which for the sake of uniformity here below in this description will be referred to as "coupons". The coupons are placed, by means of electrical cables, in electrical continuity with the cathodically protected structure to be monitored, so that the coupons are protected in exactly the same way as the structure to be monitored. It is therefore possible to know the potential of the structure by measuring the potential difference between coupon and reference electrode placed in the vicinity. Furthermore, by using shunts installed in the test posts in series with the cable connecting coupon and structure, it is possible to obtain the current absorbed by the coupon and, with the area of the exposed surface known, the current density exchanged between soil and coupon. The potential measurement described above contains a spurious contribution of ohmic drop in the soil, which depends on the distance between coupon and electrode and on the current circulating in the soil: coming from the cathodic protection system and, in some contexts, dispersed by foreign and interfering systems. In order to reduce this contribution of ohmic drop, coupon and electrode are installed in proximity; however, this may not be sufficient for obtaining an adequate approximation of the true potential, with errors in the evaluation of the state of protection or of interference of the protected structure to be monitored. Annulling of the ohmic drop is possible by means of so-called potential probes, which incorporate the reference electrode and coupon in a single body, shielded from the external environment. However, these probes are limited in their diffusion and use in that made with electrodes different from the copper/copper sulphate electrode, and often with pseudo reference electrodes. In addition, for checking interference by direct or alternating current surfaces of the coupons of sizes different one from the other are suitable. In fact, the check of alternating current (AC) interference is typically carried out with coupons with sizes of approximately 1 or 2 cm², while the surface most suitable for measuring the current absorbed and for checking direct current (DC) interference is generally an order of magnitude larger.

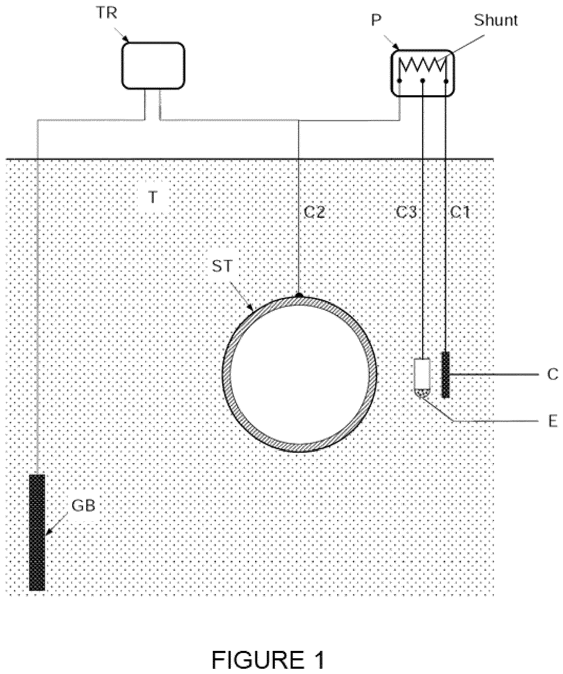

For the sake of clarity, the diagram in Fig. 1 shows the essential parts of a typical cathodic protection system, comprising:
- a coated pipeline ST, placed in the ground T, exposed to external corrosion by the ground itself, and with impressed current cathodic protection by means of a supply unit TR and a groundbed GB;
- a coupon, C, installed in the ground in proximity of the pipe, to which is connected an electrical cable C1 accessible inside a test post P and connected there to an electrical cable C2 in turn connected to the buried structure subject to cathodic protection;
- a reference electrode E installed in the ground in the vicinity of the pipe and of the coupon, provided with an electrical cable C3 accessible in the test post P.

With the permanent devices described above, the following measurements can be made using a voltmeter:
- the potential of the coupon C (cable C1) measured with respect to the reference electrode E (cable C3), representative of the pipeline potential;
- the voltage drop across a shunt S installed between cables C1 and C2, which can be converted, the resistance of the shunt being known, into circulating current absorbed by the coupon.

The cathodic protection and monitoring system may, depending on the case, comprise devices for automatically performing measurements of potential, for remotely transferring the measured data (telemetry) and also for automatically regulating the power supply system (telecontrol).

Patent application US2005006250 discloses a permanent reference electrode of copper/copper sulphate for the measurement of the real potential and of the current density of a buried metal structure, in proximity whereof it is installed, comprising: - a copper element, of high purity; - a filler material or backfill, with a base of copper sulphate, which encloses in its interior said copper element; - an external casing, with the function of container of the various parts of the reference electrode and of porous separator of the reference electrode; - at least one carbon steel coupon, assembled on said casing and electrically insulated therefrom in order to prevent direct contact;wherein the external casing, has an external insulating covering, which leaves free a zone at said at least one coupon, designed to establish the contact with the ground in which the reference electrode is buried.

### Summary of the invention

The primary object of the present invention is to develop a new permanent copper/copper sulphate gel reference electrode for cathodic protection of buried metal structures, which overcomes and remedies the limitations, as illustrated above, of the prior art, and in particular allows:
(a) high durability of the device;
(b) elimination of the contribution of ohmic drop in the value measured.

Another object of the invention is to provide a simple device which is economical to produce.

The above objects can be considered as fully achieved by the reference electrode, permanent, CSE in gel, having the features defined by independent claim 1.

Particular embodiments of the present invention are also defined by the dependent claims.

As illustrated below, the electrode that is the object of the invention offers numerous and important advantages and in particular is such as to ensure the almost complete elimination of the contribution of ohmic drop in the measured potential value, to allow the measurement of the protection current density and the verification of interference by direct and alternating dispersed currents.

The presence of glycerol in the backfill used gives the electrode antifreeze properties, minimising the risk of breakage of the body in ceramic material if the electrode is stored outdoors in winter prior to burial.

### Brief description of the drawings

These and other objects, features and advantages of the present invention will be made clear and evident from the following description of one of the preferred embodiments thereof, given purely by way of a non-limiting example with reference to the accompanying drawings, in which:
Fig. 1 is a simplified diagram showing the essential parts of a usual cathodic protection system;
Fig. 2 is a schematic view, in longitudinal section, of a preferred embodiment of a copper/copper sulphate gel permanent reference electrode, in accordance with the present invention, for testing cathodic protection and interference of buried structures.

### Description of a preferred embodiment of the invention

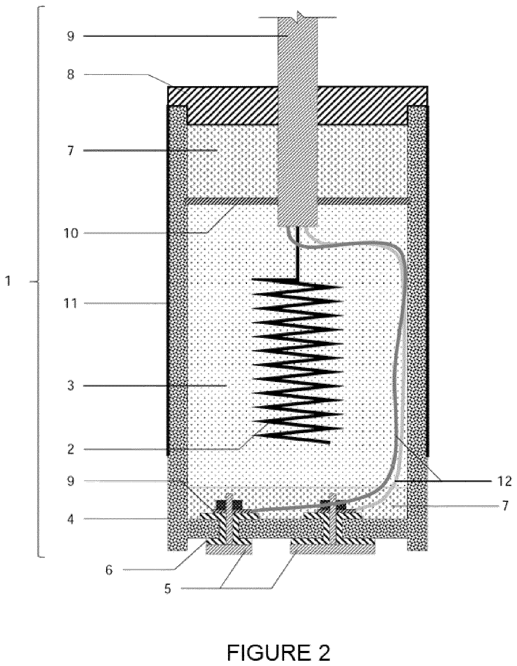

Referring to the drawings and in particular to Fig. 2, a reference electrode, of the permanent type or intended to be permanently buried in an area of ground, in accordance with the present invention, for the monitoring of the cathodic protection and of the interference of buried metal structures, is denoted as a whole by reference numeral 1.

Fig. 2 shows schematically in section a preferred embodiment of the permanent reference electrode 1 of the invention. In the following description, the terms "upper" and "lower" refer to the arrangement shown in this drawing.

In detail, the reference electrode 1, to be considered inserted in the diagram of Fig. 1 in place of the reference electrode E and of the coupon C, comprises:
- a metal element of pure copper 2, also called copper electrode element, characterised by a high purity and exhibiting, for example, an elongated cylindrical linear shape or a spiral wound wire shape;
- a special filler material 3 or backfill, in gel form, having the following composition expressed in percentage by weight: copper sulphate: 20 ÷ 30, glycerol: 40 ÷ 60, cellulose: 1 ÷ 10, and water: remainder which is formed around and encloses in its interior the copper element 2;
- an external casing 4, in porous ceramic material, which acts both as a container for the various parts of the reference electrode 1 and as a porous separator of the reference electrode;
- two carbon steel coupons 5, with different exposed surfaces, mounted in the base of the ceramic body and suitably insulated from it 6 to prevent direct contact.

The copper element 2, placed inside the backfill 3, is sealed above by means of a resin casting 7 and a cover 8, with the external element 4 acting as a container of the reference electrode 1, and is connected at an upper end to a conductor of a multipolar electrical cable 9 that extends externally to the reference electrode 1. A membrane in plastic material 10 separates backfill 3 and resin casting 7 during the manufacturing phase.

Appropriately, a part of the external casing 4 in porous ceramic material is insulated from the outside and does not act as porous separator of the reference electrode by means of enamelling or another type of insulating coating 11, leaving instead uncovered, to act as porous separator, the lower part closest to the coupons 5 and the base itself.

The carbon steel coupons 5 are mounted in the base of the container in ceramic material 4, and suitably insulated from it 6 to prevent direct contact, and in turn respectively connected to two conductors 12 of the same multipolar cable 9 mentioned above. The thickness and size of the insulant 6 and the non-enamelled or coated portion of the container 4 are such as to obtain a high proximity between porous separator, with respect to which the potential measurement is detected, and coupon. In fact, the section of non-enamelled ceramic not in direct contact with the backfill 3, which comes in proximity of the coupons 5, acts as an electrolytic bridge to minimise the distance between the coupons themselves and the actual electrode, and thus determine an almost total elimination of the ohmic drops. The same resin 7 used under the cover 8 protects the electrical connections between coupons 5 and conductors 12 of the multipolar cable 9.

Therefore, the reference electrode 1, object of the invention, has a configuration in which the copper element 2 is in direct contact with and inserted inside an electrolytic gel environment that has hygroscopic properties.

As specified above, the metal copper element 2 must be of high purity (>= 99.90%).

The composition of the backfill 3, an essential part of the reference electrode 1, was in turn defined and developed so as to have the following features:
- gel/solid consistency;
- hygroscopic nature of the mixture, given by the cellulose;
- ionic conductivity;
- presence of sulphate ions in a quantity such as to saturate the gel;
- antifreeze features due to the presence of glycerol.

The composition of the backfill 3 comprised in electrode 1 is shown in table 1 below:

**Table 1**

| **Component** | **Percentage by weight** |
|---|---|
| Copper sulphate | 20 ÷ 30 |
| Glycerol | 40 ÷ 60 |
| Cellulose Fibre | 1 ÷ 10 |
| Water | Remainder |

The surface area of the smallest coupon 5 is comprised between 0.8 cm² and 3 cm², while that of the largest coupon 5 is comprised between 6 cm² and 25 cm².

Referring to the diagram of Fig. 1, in use the reference electrode 1 (which replaces the electrode E and the coupon C) is buried in the ground T adjacent to the metal structure ST, buried, in cathodic protection, so that the container body 4 of the reference electrode 1, in turn establishes and realises, in the area of the porous separator, in the lower part of the reference electrode 1, the electrolytic contact with the ground T in which the reference electrode 1 is located, of the metal structure ST.

In addition, the multipolar cable 9, connected at one end to the copper electrode 2 and to the coupons 5 of the reference electrode 1, is connected at the other end to the test post P to which the cable C2 connected to the buried structure ST, in cathodic protection, is also connected. The cable C2 and the two conductors 12 connected to the coupons 5 are placed in electrical continuity through the SHUNT, whose resistance must be sufficiently low as not to affect the protection current circulating between structure ST and coupons 5.

Therefore, in this configuration, it is possible to monitor and measure, in particular by means of a voltmeter housed in or connected to the test post P, the potential of the metal structure ST and therefore the cathodic protection conditions in the area of the same metal structure ST, buried, adjacent to the reference electrode 1, also buried in the ground T, by measuring the potential difference between the conductor connected to the copper electrode 2 and each of the two coupons 5.

By means of shunts of adequate electrical resistance it is possible to measure the current, both direct and alternating, circulating between each of the coupons 5 and the structure ST. When the surface area of the coupons 5 is known, the value of the current density exchanged between structure ST and ground is then calculated.

The coupons 5 can be likewise used to verify the interference currents in direct or alternating current according to the methodologies described in national and international technical standards.

Naturally, numerous other applications are possible, in particular as a function of the conformation of the buried metal structure, in cathodic protection, of which the electrochemical potential is to be measured, where these applications may comprise a variable number of reference electrodes.

It is therefore clear, from what has been described, that the new permanent reference electrode in copper/copper sulphate gel with double coupon, object of the invention, applicable for the cathodic protection of buried metal structures, fully achieves the objects set and in particular differs from known and traditional reference electrodes by manufacture that ensures the durability of the electrode, the maintaining of humidity in the backfill electrolyte, antifreeze properties, the almost complete elimination of the ohmic drop contribution in potential measurements and the possibility of performing interference tests in both direct and alternating current.

## Claims

1. Permanent reference electrode of copper/copper sulphate (1) for the measurement of the real potential and of the current density of a buried metal structure (ST), in proximity whereof it is installed, comprising:
- a copper element (2), of high purity;
- a filler material or backfill (3), having following compositior expressed in percentage by weight: copper sulphate: 20 ÷ 30, glycerol: 40 ÷ 60, cellulose: 1 ÷ 10, and water: remainder, which encloses in its interior said copper element (2);
- an external casing (4), in porous ceramic material, with the function of container of the various parts of the reference electrode (1) and of porous separator of the reference electrode;
- at least one carbon steel coupon (5), assembled on said ceramic casing and electrically insulated therefrom in order to prevent direct contact;
wherein the external casing (4), in porous ceramic material, has an external insulating covering (11) which leaves free a zone at said at least one coupon (5), designed to establish the electrolytical contact with the ground (T) in which the reference electrode (1) is buried.

2. Permanent reference electrode of copper/copper sulphate (1) according to claim 1, wherein said at least one coupon (5) is mounted in the base of said ceramic casing (4), and where the distance between coupon (5) and base of the ceramic casing (4) is minimal, in the order of a few millimetres or less.

3. Permanent reference electrode of copper/copper sulphate (1) according to claim 1 or 2, wherein said copper electrode (2), placed inside the filler material or backfill (3), is sealed above and below in the ceramic casing (4), by means of respective castings of resin (7).

4. Permanent reference electrode of copper/copper sulphate (1) according to claim 3, wherein said at least one coupon (5) is connected to a respective conductor (12) of a multipolar cable (9) which extends externally to said ceramic casing (4) and carrying a conductor of connection to the copper electrode (2).

5. Permanent reference electrode of copper/copper sulphate (1) according to any one of the preceding claims, wherein two carbon steel coupons (5) of different exposed surface are provided.

6. Permanent reference electrode of copper/copper sulphate (1) according to claim 5, wherein one of said two coupons (5) has a surface area comprised between 0.8 cm² and 3 cm², and the other between 6 cm² and 25 cm²

7. Permanent reference electrode of copper/copper sulphate (1) according to any one of the preceding claims, wherein said copper electrode (2) has an elongated cylindrical linear shape or a spirally wound wire shape.

8. System for the cathodic protection of a metal structure (ST), buried, comprising at least one permanent reference electrode (1) of copper/copper sulphate (1) according to any one of the preceding claims, placed in proximity of the buried metal structure (ST) to be protected, to measure and monitor the potential thereof.

## Patentansprüche

1. Permanente Referenzelektrode aus Kupfer/Kupfersulfat (1) für die Messung des realen Potentials und der Stromdichte einer vergrabenen Metallstruktur (ST) in der Nähe ihrer Anbringung umfassend:
- ein Kupferelement (2) von hohem Reinheitsgrad;
- ein Füllmaterial oder eine Verfüllung (3) mit folgender Zusammensetzung, ausgedrückt in Gewichtsprozent: Kupfersulfat: 20-30, Glycerin: 40-60, Cellulose: 1-10 und Wasser: Rest, die in ihrem Inneren das Kupferelement (2) einschließt;
- ein äußeres Gehäuse (4) aus porösem keramischem Material, das als Behälter für die verschiedenen Teile der Referenzelektrode (1) und als poröser Separator der Referenzelektrode dient;
- mindestens eine Kohlenstoffplatte (5), die auf dem Keramikgehäuse montiert und von diesem elektrisch isoliert ist, um einen direkten Kontakt zu verhindern;
wobei das äußere Gehäuse (4) aus porösem keramischem Material eine äußere isolierende Umhüllung (11) aufweist, die eine Zone an der mindestens einen Platte (5) freilässt, die dazu bestimmt ist, den elektrolytischen Kontakt mit der Erde (T) herzustellen, in der die Referenzelektrode (1) vergraben ist.

2. Permanente Referenzelektrode aus Kupfer/Kupfersulfat (1) gemäß Anspruch 1, wobei die wenigstens eine Platte (5) im Boden des Keramikgehäuses (4) angebracht ist und wobei der Abstand zwischen der Platte (5) und dem Boden des Keramikgehäuses (4) minimal ist, in der Größenordnung von einigen Millimetern oder weniger.

3. Permanente Referenzelektrode aus Kupfer/Kupfersulfat (1) gemäß Anspruch 1 oder 2, wobei die Kupferelektrode (2), die innerhalb des Füllmaterials oder der Verfüllung (3) angeordnet ist, oben und unten im keramischen Gehäuse (4) durch entsprechende Gussstücke aus Harz (7) abgedichtet ist.

4. Die permanente Referenzelektrode aus Kupfer/Kupfersulfat (1) gemäß Anspruch 3, wobei die mindestens eine Platte (5) mit einem entsprechenden Leiter (12) eines mehrpoligen Kabels (9) verbunden ist, der sich außerhalb des Keramikgehäuses (4) erstreckt und einen Verbindungsleiter mit der Kupferelektrode (2) trägt.

5. Die permanente Referenzelektrode aus Kupfer/Kupfersulfat (1) gemäß einem der vorhergehenden Ansprüche, wobei zwei Kohlenstoffplatten (5) mit unterschiedlicher freiliegender Oberfläche vorgesehen sind.

6. Die permanente Referenzelektrode aus Kupfer/Kupfersulfat (1) gemäß Anspruch 5, wobei eine der beiden Platten (5) eine Oberfläche zwischen 0,8 cm² und 3 cm² und die andere eine Oberfläche zwischen 6 cm² und 25 cm² aufweist.

7. Die permanente Referenzelektrode aus Kupfer/Kupfersulfat (1) gemäß einem der vorhergehenden Ansprüche, wobei die Kupferelektrode (2) eine langgestreckte zylindrische Form oder eine spiralförmig gewickelte Drahtform aufweist.

8. Ein System für den kathodischen Schutz einer vergrabenen Metallstruktur (ST) umfassend wenigstens eine permanente Referenzelektrode (1) aus Kupfer/Kupfersulfat (1) gemäß einem der vorhergehenden Ansprüche, die in der Nähe der zu schützenden vergrabenen Metallstruktur (ST) angeordnet ist, um deren Potential zu messen und zu überwachen.

## Revendications

1. Électrode permanente de référence (1) en cuivre/sulfate de cuivre pour la mesure du potentiel réel et de la densité de courant d'une structure métallique (ST) enterrée, à proximité de laquelle elle est installée, comprenant :
- un élément en cuivre (2), de grande pureté ;
- un matériau de remplissage ou du remblai (3), ayant la composition suivante exprimée en pourcentage en poids de sulfate de cuivre : 20 ÷ 30, glycérol : 40 ÷ 60, cellulose : 1 ÷ 10, et de l'eau : le reste, qui enferme dans son intérieur ledit élément en cuivre (2) ;
- un boîtier externe (4), en matériau céramique poreux, ayant la fonction de conteneur des différentes parties de l'électrode de référence (1) et de séparateur poreux de l'électrode de référence ;
- au moins une rondelle (5) en acier au carbone, assemblée sur ladite enveloppe en céramique et isolée électriquement de celle-ci afin d'éviter tout contact direct ;
dans lequel le boîtier externe (4), en matériau céramique poreux, présente un revêtement isolant externe (11) qui laisse libre une zone au niveau de ladite au moins une rondelle (5), destinée à établir le contact électrolytique avec la terre (T) dans laquelle l'électrode de référence (1) est enterrée.

2. Électrode permanente de référence (1) en cuivre/sulfate de cuivre selon la revendication 1, dans laquelle ladite au moins une rondelle (5) est montée dans la base dudit boîtier céramique (4), et où la distance entre la rondelle (5) et la base du boîtier céramique (4) est minimale, de l'ordre de quelques millimètres ou moins.

3. Électrode permanente de référence (1) en cuivre/sulfate de cuivre selon la revendication 1 ou 2, dans laquelle ladite électrode de cuivre (2), placée à l'intérieur du matériau de remplissage ou du remblai (3), est scellée au-dessus et au-dessous dans le boîtier céramique (4), au moyen de moulages respectifs de résine (7).

4. Électrode permanente de référence (1) en cuivre/sulfate de cuivre selon la revendication 3, dans laquelle ladite au moins une rondelle (5) est connectée à un conducteur respectif (12) d'un câble multipolaire (9) qui s'étend extérieurement audit boîtier céramique (4) et portant un conducteur de connexion à l'électrode de cuivre (2).

5. Électrode permanente de référence (1) en cuivre/sulfate de cuivre selon l'une quelconque des revendications précédentes, dans laquelle deux rondelles (5) en acier au carbone de surface exposée différente sont prévues.

6. Électrode permanente de référence (1) en cuivre/sulfate de cuivre selon la revendication 5, dans laquelle l'une desdites deux rondelles (5) a une surface comprise entre 0,8 cm² et 3 cm², et l'autre entre 6 cm² et 25 cm².

7. Électrode permanente de référence (1) en cuivre/sulfate de cuivre selon l'une quelconque des revendications précédentes, dans laquelle ladite électrode de cuivre (2) a une forme linéaire cylindrique allongée ou une forme de fil enroulé en spirale.

8. Système de protection cathodique d'une structure métallique (ST), enterrée, comprenant au moins une électrode permanente de référence (1) en cuivre/sulfate de cuivre (1) selon l'une quelconque des revendications précédentes, placée à proximité de la structure métallique (ST) enterrée à protéger, pour mesurer et surveiller son potentiel.
